**Europäisches Patentamt**

**European Patent Office**

**Office européen des brevets**

(11) Veröffentlichungsnummer: **0 253 060**
**B1**

# (12) EUROPÄISCHE PATENTSCHRIFT

(45) Veröffentlichungstag der Patentschrift:
**30.05.90**

(21) Anmeldenummer: **87104108.3**

(22) Anmeldetag: **20.03.87**

(51) Int. Cl.⁵: **A61B 6/03**, G01V 5/00,
G01N 23/04

(54) **Röntgenscanner.**

(30) Priorität: **14.07.86 DE 3623722**

(43) Veröffentlichungstag der Anmeldung:
**20.01.88 Patentblatt 88/3**

(45) Bekanntmachung des Hinweises auf die Patenterteilung:
**30.05.90 Patentblatt 90/22**

(84) Benannte Vertragsstaaten:
**BE DE FR GB**

(56) Entgegenhaltungen:
**EP-A- 0 100 562**
**EP-A- 0 194 477**
**FR-A- 2 356 160**
**US-A- 4 366 382**

(73) Patentinhaber: **Heimann GmbH, Weher**
**Köppel 6 Postfach 30 07, D-6200 Wiesbaden 1(DE)**

(72) Erfinder: **Dönges, Gerhard, Dipl.-Ing., Am Markt 1,**
**D-6209 Heidenrod 1(DE)**
Erfinder: **Koch, Cornelius, Dipl.-Ing., Leberberg 20,**
**D-6200 Wiesbaden(DE)**

(74) Vertreter: **Fuchs, Franz-Josef, Dr.-Ing. et al,**
**Postfach 22 13 17, D-8000 München 22(DE)**

**Beschreibung**

Die Erfindung betrifft einen Röntgenscanner mit einem Röntgenstrahler für ein fächerförmiges Röntgenstrahlenbündel auf einer Seite und einer Zeile von einzelnen Detektoren auf der anderen Seite einer Transportvorrichtung für zu untersuchendes Gut sowie mit einer Elektronik zur Erfassung und Verarbeitung der Detektorsignale und einem nachgeschalteten Sichtgerät, bei dem die Elektronik bis einen Bildspeicher aufweist, der für jeden Einzeldetektor je eine Speicherzeile aufweist, wobei die Elektronik einen Komparator für die Erkennung fehlerhafter Detektorsignale aufweist, durch den die Einspeicherung in den Bildspeicher derart steuerbar ist, daß bei einem fehlerhaften Detektorsignal die Übernahme der Information in die dem Detektor zugeordnete Speicherzeile gesperrt wird.

Ein Röntgenscanner dieser Art dient beispielsweise zur Gepäckuntersuchung. Jeder der Detektoren kann aus einem Szintillator zur Umwandlung von Röntgenstrahlung in sichtbares Licht bestehen, das mittels einer Fotodiode in einen elektrischen Strom umgesetzt wird. Zur Verarbeitung der parallel vorliegenden Meßwerte können diese über elektronische Schalter (Multiplexer) in eine serielle Folge analoger Meßwerte umgesetzt, digitalisiert und so in einen digitalen Bildspeicher eingeschrieben werden, daß bei der Darstellung des Speicherinhaltes über einen Digital-Analog-Wandler auf einem Videomonitor ein durchlaufendes Bild entsteht. Bei horizontal laufendem Bild werden spaltenweise Daten in den Bildspeicher geschrieben. Jeder Detektor erzeugt dann eine Zeile des Videobildes.

Es ist ein Röntgenscanner dieser Art bekannt, bei dem die Detektorzeile rechtwinklig geknickt ist und sich über zwei Seiten des Untersuchungsraumes erstreckt. Die dabei auftretende ortsabhängige Verzerrung wird gemäß der E-A-O 100 562 mit einer Zuordnereinheit beseitigt, die durch elektronisch gesteuertes Auslassen von Detektorkanälen die nichtlineare Meßstabsfunktion so entzerrt, daß der Abbildungsmaßstab dem einer ideal linearen oder kreisbogenförmigen Zeile entspricht. Bei dem bekannten Röntgenscanner ist die Erkenntnis ausgenutzt, daß einzelne fehlende Detektorkanäle innerhalb der Detektorreihe zu keiner sichtbaren Beeinträchtigung des erzeugten Videobildes führen. Dabei werden fest vorgegebene Detektorkanäle ausgelassen.

Bei einem Röntgenscanner dieser Art kann ein Einzeldetektor ausfallen. Dies würde dann, wenn der ausgefallene Detektor zu dem programmgemäß ausgelassenen Detektor benachbart ist, eine in der bildlichen Darstellung möglicherweise sichtbare Störung erzeugen, falls an dieser Stelle der Gradient der Grauwertes, d.h. der Signalamplitude, genügend groß ist.

Der Erfindung liegt demgemäß die Aufgabe zugrunde, einen Röntgenscanner der eingangs genannten Art so auszubilden, daß beim Ausfall eines Detektors eine kaum sichtbare Störung in der bildlichen Darstellung erfolgt.

Diese Aufgabe ist erfindungsgemäß durch die Merkmale des kennzeichnenden Teils des Anspruchs gelöst. Bei dem erfindungsgemäßen Röntgenscanner ist erreicht, daß fehlerhafte Detektorsignale nicht bildlich dargestellt werden. Die durch die Zuordnereinheit ausgelassenen Detektorkanäle sind auf dem Monitorbild kaum sichtbar. In ihr sind die auszulassenden Detektorkanäle zwar vorprogrammiert, fällt aber ein Detektor aus oder liefert er ein fehlerhaftes Signal, so wird dessen Signal anstelle eines geeigneten vorprogrammierten Detektorsignales ausgelassen, so daß sich die Zahl der ausgelassenen Kanäle nicht erhöht.

Die Erfindung ist nachfolgend anhand eines in der Zeichnung dargestellten Ausführungsbeispieles näher erläutert. Es zeigen:

Fig. 1 einen Röntgenscanner nach der Erfindung,
Fig. 2 bis 6 graphische Darstellungen zur Erläuterung der Figur 1.

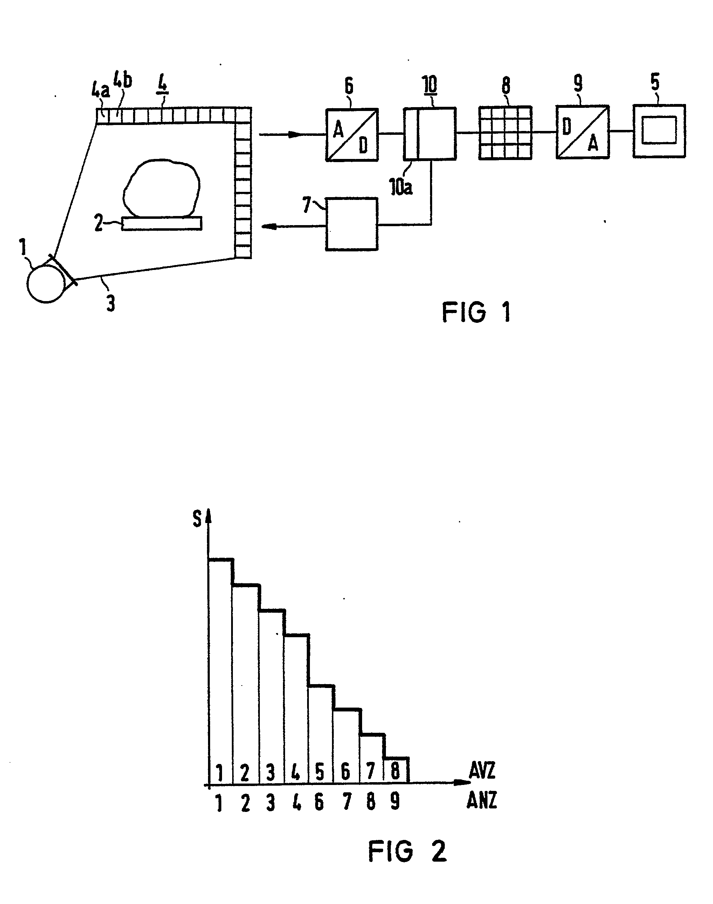

In der Figur 1 ist ein Röntgenstrahler 1 dargestellt, der Gut auf einer Transportvorrichtung 2 mit einem fächerförmigen Röntgenstrahlenbündel 3 durchstrahlt, dessen Fächerebene quer zur Transportrichtung liegt, welche senkrecht zur Zeichenebene verläuft. Die aus dem Gut austretende Strahlung wird von einer rechtwinklig geknickten Zeile 4 aus einzelnen Detektoren 4a, 4b usw. erfaßt, deren Ausgangssignale über eine Elektronik einem Sichtgerät 5 zugeführt werden. Die Elektronik umfaßt einen Analog- Digital-Wandler 6, eine Zuordnereinheit 7, einen Bildspeicher 8, einen Digital-Analog-Wandler 9 und eine Steuerschaltung 10 mit einem Komparator 10a.

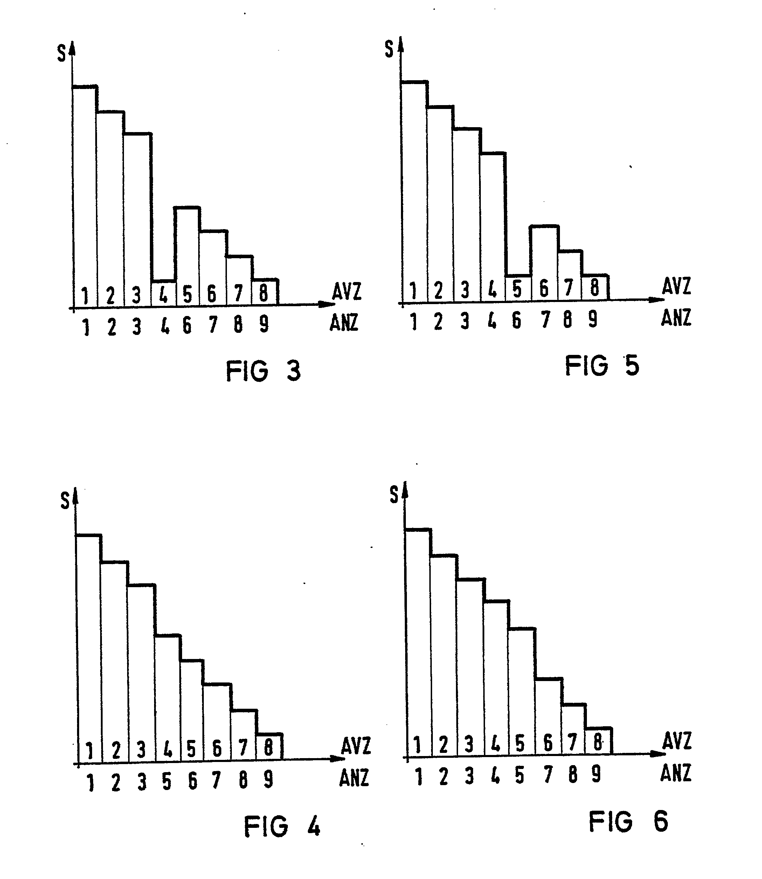

In der Figur 2 ist der Verlauf der relativen Signalamplitude S in Abhängigkeit von der Adresse vor und nach der Zuordnereinheit 7 dargestellt. Über der Abszisse ist dabei die Adresse AVZ vor und unter der Abszisse die Adresse ANZ nach der Zuordnereinheit 7 dargestellt. Dies gilt auch für die Figuren 3 bis 6.

Bei der beispielsweisen Signalfolge gemäß Figur 2 nimmt die Signalamplitude stufenweise von Detektorkanal zu Detektorkanal um den gleichen Betrag ab. Es ist dabei davon ausgegangen, daß die Detektorzeile 4 aus neun Detektoren besteht und der fünfte Detektor in programmierter Weise ausgelassen wird, und zwar zur Geometrieentzerrung, wie dies in der E-A-0 100 562 beschrieben ist. Demgemäß bildet die Zuordnereinheit 7 im Anschluß an den Kanal 4 ein um zwei Stufen reduziertes Signal des Kanales 5, der nach der Zuordnereinheit zum Kanal 6 wird.

Die Figur 3 zeigt im wesentlichen die Signalfolge gemäß Figur 2. Es ist jedoch dabei davon ausgegangen, daß der vierte Kanal defekt ist. Der Komparator 10a erkennt diesen Defekt, indem er beispielsweise als Ausfallkriterium das Nichteinhalten vorgegebener Grenzwerte für das Nullsignal (Off-Set) und die Signalamplitude bei 100 %-Röntgenintensität heranzieht. Bei Ausfall des vierten Kanales wird gemäß Figur 4 dann nicht der fünfte Kanal vor der Zuordnereinheit 7, sondern der Kanal vier ausgelassen. An den Kanal drei schließt sich also der ursprünglich ausgelassene Kanal fünf als Kanal vier an, der nach der Zuordnereinheit 7 wieder zum Kanal fünf wird.

Der Figur 5 liegt zugrunde, daß der ursprüngliche Kanal sechs, der wegen der Auslassung des Kanales fünf zum Kanal fünf geworden ist, defekt ist. Der Komparator 10a erkennt dies ebenfalls und bewirkt, daß nicht der ursprüngliche Kanal fünf, sondern der Kanal sechs ausgelassen wird. An den ursprünglichen Kanal vier schließt sich also der ursprüngliche Kanal fünf an, während der ursprüngliche Kanal sechs ausgelassen und der ursprüngliche Kanal sieben zum Kanal sechs wird usw. Nach der Zuordnereinheit 7 ergibt sich dann die in der Figur 6 angegebene Kanalreihenfolge.

In der Zuordnereinheit 7 werden also die Adressen der ausgefallenen Kanäle mit den Adressen der zur Geometrieentzerrung auszulassenden, vorgegebenen Kanäle verglichen. Es werden möglichst viele defekte Detektorsignale durch Modifikation der Entzerrungsmatrix durch Auslassen unterdrückt. Versuche zeigten, daß es zulässig ist, die Adresse eines ausgelassenen Kanales um die halbe Distanz zum nächsten ausgelassenen Kanal zu verschieben, ohne daß die Geometrieentzerrung sichtbar beeinträchtigt wird. Nach erfolgter Modifikation wird die Zuordnereinheit 7 mit den korrigierten Adressen geladen. Ein Prozessor der Zuordnereinheit 7 bewirkt dies und enthält hierzu einen Schreib-Lesespeicher. Versuche zeigten weiterhin, daß annähernd so viele Fehler unterdrückt werden können wie Detektorkanäle für die Geometrieentzerrung ausgelassen werden.

Bei dem Beispiel wird die Zeile 4 über die Zuordnereinheit 7 adressiert. Ausgelassene Detektorkanäle werden nicht adressiert und damit nicht abgefragt. Der Komparator 10a detektiert Fehler in der beschriebenen Weise und sperrt die Weitergabe der Daten defekter Kanäle an den Bildspeicher 8. Weiterhin werden in der Steuerschaltung 10 die Solladressen für Zeile 4 erzeugt und die Zuordnereinheit 7, die einen Schreib-Lese-Speicher enthält, mit den zur Geometrieentzerrung und zur Fehlerunterdrückung nötigen Istadressen als Daten geladen.

Die Erfindung ist nicht auf eine Knickzeile gemäß der Figur 1 beschränkt. Bei Linearzeilen können einzelne Detektorkanäle in regelmäßigen Abständen ebenfalls ausgelassen werden und im Fehlerfall können defekte Kanäle anstelle der vorgesehenen Detektorkanäle ausgelassen werden.

## Patentansprüche

1. Röntgenscanner mit einem Röntgenstrahler (1) für ein fächerförmiges Röntgenstrahlenbündel (3) auf einer Seite und einer Zeile (4) von einzelnen Detektoren (4a, 4b) auf der anderen Seite einer Transportvorrichtung (2) für zu untersuchendes Gut sowie mit einer Elektronik (6 bis 10a) zur Erfassung und Verarbeitung der Detektorsignale und einem nachgeschalteten Sichtgerät (5), bei dem die Elektronik (6 bis 10a) einen Bildspeicher (8) aufweist, der für jeden Einzeldetektor (4a, 4b, usw.) je eine Speicherzeile aufweist, wobei die Elektronik (6 bis 10a) einen Komparator (10a) für die Erkennung fehlerhafter Detektorsignale aufweist, durch den die Einspeicherung in den Bildspeicher (8) derart steuerbar ist, daß bei einem fehlerhaften Detektorsignal die Übernahme der Informationen in die dem Detektor (4a, 4b) zugeordnete Speicherzelle gesperrt wird, dadurch gekennzeichnet, daß eine Zuordnereinheit (7) die Adressen von auszulassenden, vorgegebenen Detektorekanälen bestimmt und diese vorbestimmten Detektorkanäle zur Bilderstellung nicht adressiert und nicht abfragt und beim Ausfall eines Detektors (4a, 4b) die Adresse des ausgefallenen Detektorkanals mit den Adressen der vorgegebenen Detektorkanäle vergleicht, den ausgefallenen Detektorkanal ausläßt und anstelle einen vorbestimmten Detektorkanal zur Bilderstellung adressiert und abfragt.

## Claim

1. X-ray scanner with an x-ray source (1) for a fan-shaped x-ray beam (3) on one side of a conveying device (2) for the goods to be examined and a row (4) of individual detectors (4a, 4b) on the other side, an electronic system (6 to 10a) for detecting and processing the detector signals and a visual display unit (5) connected thereafter, the electronic system (6 to 10a) having an image memory (8), which has for each individual detector (4a, 4b, etc.) a respective memory row, wherein the electronic system (6 to 10a) has a comparator (10a) for recognising faulty detector signals, through which the storage in the image memory (8) is controllable so that with a faulty detector signal the transfer of data into the memory row allocated to that detector (4a, 4b) is blocked, characterised in that an allocator unit (7) determines the addresses of specified detector channels to be omitted and does not address or scan these predetermined detector channels for image building and with the failure of a detector (4a, 4b) it compares the address of the failing detector channel with the addresses of the specified detector channels, omits the failing detector channel and addresses and scans instead a predetermined detector channel for image building.

## Revendication

1. Scanner X comportant un émetteur de rayons X (1) servant à émettre un faisceau (3) de rayons X en forme d'éventail situé d'un côté, et une ligne (4) de détecteurs individuels (4a, 4b) située de l'autre côté d'un dispositif de transport (2) prévu pour l'objet à examiner, ainsi qu'un système électronique (6 à 10a) servant à détecter et à traiter des signaux de données, et un appareil de visualisation (5) branché en aval, et dans lequel le système électronique (6 à 10a) comporte une mémoire d'images (8 à 10) possédant une ligne de mémoire pour chaque détecteur individuel (4a, 4b, etc.), et un comparateur (10a) servant à identifier des signaux erronés des détecteurs et à l'aide duquel la mémorisation dans la mémoire d'images (8) peut être commandée de telle sorte que, dans le cas d'un signal erroné d'un détecteur, le transfert des informations dans la cellule de mémoire associée au détecteur (4a, 4b) est bloqué, caractérisé par le fait qu'une unité d'affectation (7) détermine les adresses de canaux prédéterminés de détecteurs devant être éliminés, et que ces canaux prédéterminés des détecteurs ne sont pas adressés ni interrogés pour la formation de l'image et, dans le cas où un détecteur (4a, 4b) tombe en panne, compare l'adresse du canal de détecteur éliminé aux adresses de canaux prédéterminés de détecteurs, élimine le canal de détecteur, qui est défaillant, et adresse et interroge, à sa place, un canal de détecteur prédéterminé, pour la formation de l'image.

FIG 1

FIG 2

FIG 3

FIG 5

FIG 4

FIG 6